# EUROPEAN PATENT APPLICATION

(11) **EP 0 699 558 A1**
(43) Date of publication of application: **06.03.1996**
(21) Application number: 94500204.6
(22) Date of filing: 20.12.1994
(51) Int. Cl.: B60P 3/12

(54) **Device for towing vehicles**

(30) Priority: 01.07.1994 ES 9401440
(71) Applicant: AUTOMOVIL CLUB ASISTENCIA, S.A., E-08021 Barcelona (ES)
(72) Inventor: Samaniego I Raventos, Adria, 08021 Barcelona (ES); Guiran Belart, Carles, 08021 Barcelona (ES); Solsona Gomez, Delfi, 08021 Barcelona (ES); Salvany Daura, Joan, 08021 Barcelona (ES); Martinez Munoz, Manuel, 08021 Barcelona (ES); Sauret Manen, Pere, 08021 Barcelona (ES)
(74) Representative: Marques Alos, Fernando

(57) **Abstract**

**DEVICE FOR TOWING VEHICLES**, especially intended for garage vehicles used for the in situ repair of motor vehicles or simply for towing vehicles, basically characterized by being constituted by a towing assembly formed by a telescopic arm 1 at the end of which there is a double yoke 11 for coupling up the vehicle to be towed 12, which rests on a set of wheels 4 equipped with brakes 5, which emerges from the inside of the vehicle 2 where it is permanently stored, being coupled to a hook provided for this purpose on the outside of the same 3.

## Description

### DESCRIPTION OF THE INVENTION

The object of the present invention, as expressed in the declarations of the following descriptive report, consists in a DEVICE FOR TOWING VEHICLES, especially intended for garage vehicles used for the in situ repair of motor vehicles.

The structure of the mobile garages includes a loading surface adapted to the transport of a set of tools, in addition to a selection of emergency spares which guarantee the repair of a vehicle immobilized by a breakdown of medium complexity.

On many occasions, however, when the owner requests the services of a garage vehicle, he/she is incapable of guiding the assistance headquarters as to the origin of the breakdown, and so when the garage vehicle arrives it is observed that the breakdown cannot be repaired with the means available, it being necessary to tow the broken down vehicle to a specialized garage.

Once this stage has been reached, the intervention of a vehicle with towing crane is necessary, so the garage vehicle has to leave and the occupants of the broken down vehicle have to remain with the same until the towing vehicle arrives.

This means that the garage vehicle carries out an unproductive service, using up time attending to a vehicle which it cannot repair to the detriment of other calls for assistance from vehicles which can be repaired. It moreover produces another negative effect as far as the occupants of the broken down vehicle are concerned, as they cannot really be assisted until the second vehicle arrives, having to wait as a minimum double the time necessary to be rescued.

The solution to these problems was the incorporation of a towing crane to the garage vehicle. In this way, if the vehicle cannot be repaired, the same garage vehicle can remove it.

The problem for the construction of a garage vehicle with these characteristics lay in the fact that the traditional jib cranes could not be installed on the garage vehicles without this implying the almost complete elimination of the useable space necessary for the spares and tools. It was therefore necessary to develop a new system of crane which did not involve a drastic reduction in the loading capacity in terms of both volume and weight. The arm cranes currently used thus appeared, consisting in an articulated arm on the rear part of the garage vehicle, equipped at its end with a support where the front wheels of the vehicle to be towed are positioned. This device has two positions, that for its use, horizontally extended at an appropriate height for the road, and that when not in use, vertically retracted on the rear part of the garage vehicle.

As this arm crane is articulated on the outside of the towing vehicle, its loading surface is hardly affected, it being possible to equip it with the necessary tools and spare parts.

It has, however, been noticed that these crane arms have an important inconvenience. Given that the arm crane is articulated at the very end of the loading vehicle, and that in its position of use it is maintained in a horizontal position, the weight of the towed vehicle has direct repercussions on the rear suspension of the garage vehicle, its weight being multiplied by the distance of the arm crane, which acts as a lever arm.

This means that the vehicles equipped with this kind of arm crane have to be reinforced as far as their rear suspension, and their structure or chassis is concerned, given that such an intense stress, applied in a continuous manner, always ends up by causing deformations to the side beams, especially in small van-type vehicles.

These reinforcements entail a considerable increase in the weight of the vehicle, which on occasions reaches such an extent that it is impossible to tow a car and its occupants without exceeding the maximum transportable weight of the same, as the weight of the towed vehicle reverts to the tower.

Faced with this problem, a new type of towing device has been designed, which does not limit the loading volume of the garage vehicle and which guarantees that the weight of the vehicle towed does not fall onto the towing vehicle, thus always managing to maintain the maximum weight of the garage vehicle within the legal limits, and at the same time increasing the longevity of the loading vehicles, on freeing them from the sustained torsion and tension which generate deformations to the chassis and suspension.

The new concept introduced is that of the retractable towing trailer, consisting in the incorporation, within the cargo area of the garage vehicle, of an articulated support equipped with a wheel assembly, which on being removed from inside the garage vehicle will support the whole weight of the vehicle towed without having any repercussions on the towing vehicle.

This novel DEVICE FOR TOWING VEHICLES basically consists of a telescopic arm which extends from inside the vehicle, coupling on to a hook provided for this purpose on the outside of the same, and resting on a set of wheels equipped with mechanical brakes, by means of two connecting rods driven by a hydraulic piston, the purpose of which is to raise the telescopic arm onto the wheels. At the end of the telescopic arm there is a double yoke for coupling up the vehicle to be towed.

When the vehicle to be towed has been coupled to the new towing device, its entire weight falls on the wheel shaft of the towing device itself, whilst the garage vehicle merely moves the load as if it were an independent trailer.

In this way the tare of the garage vehicle is not affected by the weight of the vehicle towed, the total weight of the same always remaining within the legal margins established.

Moreover, the chassis and especially the rear suspension of the garage vehicle are not subjected to overstrain which is not calculated at its design stage, and so the permanent deformations produced by the conventional towing systems completely disappear with the introduction of this new system.

### DESCRIPTION OF THE DRAWINGS

With the aim of illustrating that which has been set forth thus far, two sheets of drawings accompany the present descriptive report, forming an integral part of the same, in which a purely illustrative example of performance, not restricting the practical possibilities of the invention, is shown in a simplified and schematic way.

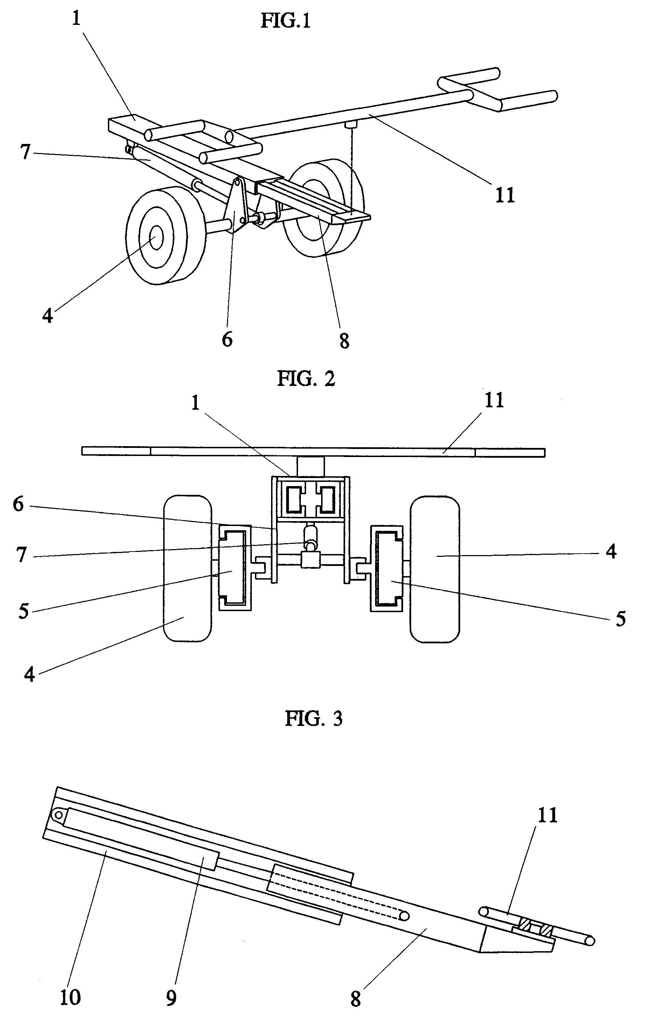

In these drawings figure 1 corresponds to a general view of the new towing device.

Figure 2 corresponds to a cross section of the same, carried out at the height of the wheel assembly.

Figure 3 corresponds to a cross-sectional view of the telescopic arm.

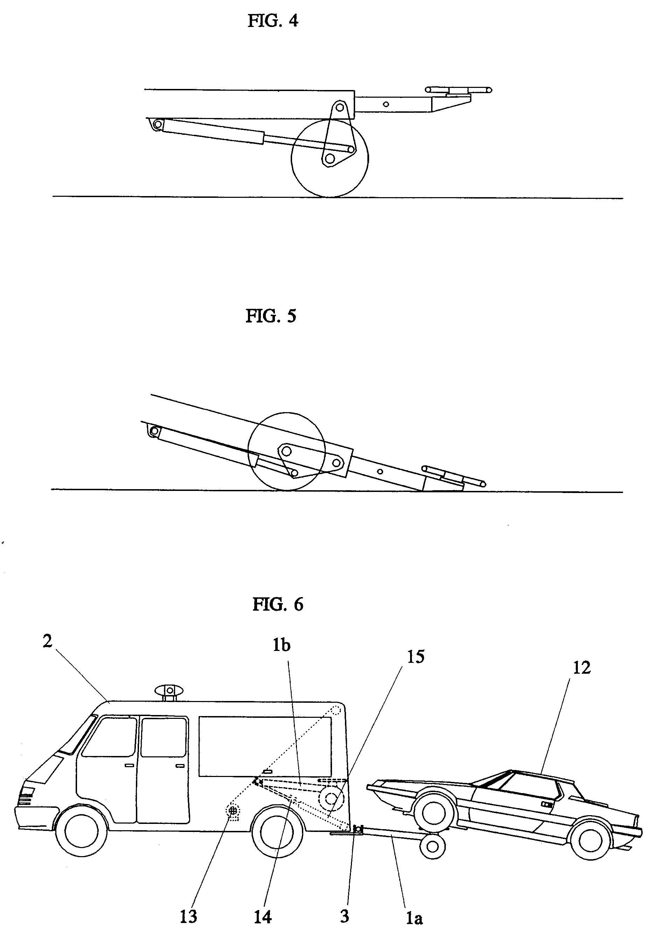

Figure 4 and figure 5 both correspond to views in which the new mechanism can be seen in its two relative positions, the first for transporting or raised and the second for loading.

Figure 6 corresponds to a general view of the whole mechanism in which it can be seen in its position for use, and, at the same time, in its retracted position inside the garage vehicle, where it has been represented by a dotted line.

### DESCRIPTION OF A PRACTICAL CASE

The present DEVICE FOR TOWING VEHICLES is made up by a telescopic arm 1 which emerges from the inside of the vehicle 2, coupling on to a hook provided for this purpose on the outside of the same 3, and resting on a set of wheels 4 equipped with brakes 5, by means of two connecting rods 6 driven by a hydraulic piston 7, the purpose of which is to raise the telescopic arm onto the wheels. The mobile part of the telescopic arm 8 is driven by a second hydraulic piston 9 located on the inside of the fixed arm 10, and at its end there is a double yoke 11 to couple the vehicle to be towed 12.

The towing device is introduced into the inside of the garage vehicle in the following manner:
Starting from the position of use of the device 1a, the security lock is first released from hook 3 and is removed from the towing assembly with the aid of a winch 13. When the towing assembly is hanging from the cable of the winch, the coupling joint of the arm is placed in a guide 14 positioned at the end of a third hydraulic piston 15 located on the inside of the garage vehicle, this piston at that time being in a retracted position. Finally the piston 15 is actioned until the whole towing assembly reaches the storage position on the inside of the garage vehicle 1b.

To remove the towing assembly, the same movements are carried out in reverse order.

When the towing assembly has been lowered from the garage vehicle, the broken down vehicle is coupled, for which the piston of the telescopic arm is first activated until it is in its extended position.

The piston 7 is then actioned so that the extended arm is lowered, positioning the double yoke or coupling ladle at ground level. Next, position the vehicle to be towed on the yoke, securing the coupling by means of the corresponding belts. Should the vehicle to be towed be a distance from the ground at which it cannot enter the yoke, this operation will be carried out with the aid of small independent ramps.

Once the vehicle has been coupled to the towing assembly, piston 7 is again activated so as to raise the telescopic arm, followed by piston 9 so as to retract the same, leaving the broken down vehicle ready to be towed.

To uncouple the towed vehicle the operations described are carried out in reverse order.

Having made the description to which the above report refers, it is now necessary to insist that the details for putting the idea exposed into effect may undergo small alterations, always based on the fundamental principles of the idea, which are in essence those reflected in the paragraphs of the description which has been made.

Having established the concept set forth, the following note of claims is drafted below, thus summarizing the new developments which are being claimed:

## Claims

1. "DEVICE FOR TOWING VEHICLES"
especially intended for garage vehicles used for the in situ repair of motor vehicles or simply for towing vehicles, basically characterized by being constituted by a towing assembly formed by a telescopic arm 1 at the end of which there is a double yoke 11 for coupling up the vehicle to be towed 12, which rests on a set of wheels 4 equipped with brakes 5, which emerges from the inside of the vehicle 2 where it is permanently stored, being coupled to a hook provided for this purpose on the outside of the same 3.

2. "DEVICE FOR TOWING VEHICLES"
in accordance with the previous claim, characterized by the fact that the moving part of the telescopic arm 8 is driven by a second hydraulic piston 9 located on the inside of the fixed arm 10.

3. "DEVICE FOR TOWING VEHICLES"
in accordance with previous claims, characterized by the fact that the telescopic arm 1 rests on the set of wheels 4 by means of two connecting rods 6 driven by a hydraulic piston 7 fixed to the telescopic arm itself, the purpose of which is to raise it onto the wheels of the wheel assembly.
